# EUROPÄISCHE PATENTANMELDUNG

(11) **EP 0 873 927 A2**
(43) Veröffentlichungstag der Anmeldung: **28.10.1998**
(21) Anmeldenummer: 98105067.7
(22) Anmeldetag: 20.03.1998
(51) Int. Cl.: B60T 13/66

(54) **Bremssystem für eine Lokomotive**

(30) Priorität: 25.04.1997 DE 19717556
(71) Anmelder: ABB Daimler-Benz Transportation (Technology) GmbH, 13627 Berlin (DE)
(72) Erfinder: Jaun, Walter, Dipl. El.-Ing., ETH, 8700 Küsnacht (CH); Deist, Lothar, Dipl.-Ing., 36211 Alheim (DE); Frank, Helge, Dipl.-Ing., 34134 Kassel (DE)
(74) Vertreter: Luderschmidt, Schüler & Partner GbR

(57) **Zusammenfassung**

Es wird ein Bremssystem für eine Lokomotive vorgeschlagen, mit einer Hauptluftbehälterleitung (1), welche von einer Drucklufterzeugungseinrichtung (2) gespeist wird, und mit einer Hauptluftleitung (4), welche über ein Zugbremsventil (3) von der Drucklufterzeugungseinrichtung (2) gespeist wird. Jedem Drehgestell (17, 28) sind zwei Druckluftleitungen zugeführt, nämlich eine erste Druckluftleitung (24), welche über ein Absperrventil (7), ein Rückschlagventil (5) und einen Druckluftbehälter (6) mit der Hauptluftbehälterleitung (1) verbunden ist und welche die Lok-Bremsventile (8, 10) zur Beaufschlagung von Bremsen (9, 11) des Drehgestells speist, und eine zweite Druckluftleitung (25), welche direkt mit der Hauptluftbehälterleitung (1) verbunden ist und welche eine Ansteuerung (12) für die Federspeicherbremse und/oder eine Ansteuerung (13) für den Putzklotz (15) und/oder eine Ansteuerung (14) für die Spurkranzschmierung (16) speist. Die Ansteuerung des Zugbremsventils (3), der Lok-Bremsventile (8, 10) sowie die Aktivierung der Ansteuerung (12) für die Federspeicherbremse und/oder der Ansteuerung (13) für den Putzklotz (15) und/oder der Ansteuerung (14) für die Spurkranzschmierung (16) erfolgt über eine zentrale, elektronische Bremssteuereinheit (20) und einen Bremsdatenbus (21). Der Bremssteuereinheit (20) liegen eingangsseitig Signale der vom Lokführer bedienbaren Vorgabeeinrichtungen (22, 27) und Signale einer Einrichtung (23) zur Erfassung von sich aus dem aktuellen Betrieb ergebenden Größen vor - wie Geschwindigkeit und Bremsart -.

## Beschreibung

Die Erfindung bezieht sich auf ein Bremssystem für eine Lokomotive gemäß dem Oberbegriff des Anspruchs 1.

Bei einem Bremssystem für eine Lokomotive ist es allgemein bekannt, eine Drucklufterzeugungseinrichtung einzusetzen, welche direkt eine Hauptluftbehälterleitung sowie über ein Zugbremsventil eine Hauptluftleitung speist. Die Hauptluftbehälterleitung dient zur Druckluftversorgung der direkten Bremse der Lokomotive (sogenannte direkte Bremse) und zur Druckluftversorgung von Hilfsbetrieben der Lokomotive und des Zugverbandes, beispielsweise pneumatischen Türöffnungseinrichtungen. Die Hauptluftleitung dient zur Druckluftversorgung und Steuerung der Wagenbremsen eines Zugverbandes und bei herkömmlichen Bremssystemen auch zum Steuern und Betätigen der Lokomotivbremse (sogenannte indirekte Bremse). Dabei ist es üblicherweise erforderlich, daß zur Ansteuerung einer Vielzahl von pneumatisch zu aktivierenden Funktionen der Lokomotive - wie beispielsweise die Ansteuerung der Bremsen der Lokomotive (direkte Bremse), die Ansteuerung der indirekten Bremse, die Ansteuerung der Federspeicherbremse, die Ansteuerung von Putzklötzen, die Ansteuerung von Spurkranzschmierungen und die Ansteuerung zum Sanden - eine Vielzahl von Druckluftleitungen in die Führerstände und Drehgestelle der Lokomotive zu verlegen sind. Dies ist auf Grund des notwendigen Raumbedarfs, des Gewichts und der Kosten (hoher Montageaufwand) von Nachteil.

Aus dem Stand der Technik - beispielsweise DE 4242392 A1 - ist ein Bremssystem für ein Schienenfahrzeug bekannt, das eine Reihe von bisher pneumatisch realisierten Funktionen auf elektrische Weise ausführt.

Der Erfindung liegt die Aufgabe zugrunde, ein Bremssystem für eine Lokomotive der eingangs genannten Art anzugeben, bei dem das elektrisch-pneumatische Steuersystem weiter vereinfacht ist und bei dem zusätzlich die Hilfsbetriebe der Lokomotive im System integriert sind.

Diese Aufgabe wird in Verbindung mit den Merkmalen des Oberbegriffes erfindungsgemäß durch die im Kennzeichen des Anspruchs 1 angegebenen Merkmale gelöst.

Die mit der Erfindung erzielbaren Vorteile bestehen insbesondere darin, daß eine Verlegung von Druckluftleitungen in die Führerstände und Drehgestelle der Lokomotive für die Ansteuerung der direkten und indirekten Bremse, die Ansteuerung der Federspeicherbremse, die Ansteuerung von Putzklötzen, die Ansteuerung von Spurkranzschmierungen und die Ansteuerung zum Sanden nicht mehr erforderlich ist.

Jedes Drehgestell wird aus Sicherheitsgründen über zwei getrennte, mit der Hauptluftbehälterleitung verbundene Druckluftleitungen versorgt, wobei die erste, die Lok-Bremsventile speisende Druckluftleitung auch bei Ausfall der Hauptluffbehälterleitung noch über einen ausreichenden Druckluftvorrat verfügt, um eine Notbremsung der Lokomotive einzuleiten. Die Ansteuerung der Federspeicherbremse, die Ansteuerung von Putzklötzen, die Ansteuerung von Spurkranzschmierungen und die Ansteuerung zum Sanden haben keinen Zugang zu diesem im Störfall wichtigen Druckluftvorrat, da sie über die eigene, zweite Druckluftleitung direkt mit der Hauptluftbehälterleitung verbunden sind.

Zur Ansteuerung der direkten und indirekten Bremse sowie der Federspeicherbremse, des Putzklotzes, der Spurkranzschmierung und der Einrichtung zum Sanden sind lediglich elektrische Signalleitungen zwischen den Vorgabeeinrichtungen in den Führerständen und der Bremssteuereinheit sowie zwischen der Bremssteuereinheit und dem Zugbremsventil, den Lok-Bremsventilen und den Ansteuerungen erforderich. Derartige Signalleitungen sind wesentlich einfacher als Druckluftleitungen verlegbar. Es ergibt sich eine wesentliche Kostenersparnis, insbesondere durch eine vereinfachte Montage.

Die Erfindung wird nachstehend anhand der in der Zeichnung dargestellten Ausführungsbeispiele erläutert. Es zeigen:
- Fig. 1: ein Prinzipbild des Bremssystems einer Lokomotive,
- Fig. 2: die Verknüpfung einzelner Baukomponenten der Lokomotive mit einer Sicherheitsschleife.

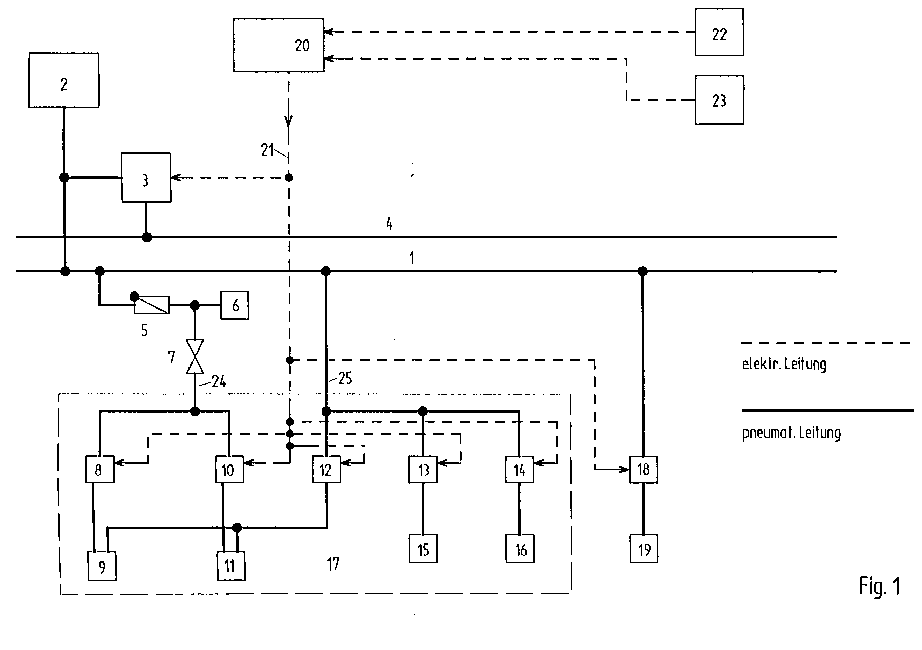

In Fig. 1 ist ein Prinzipbild des Bremssystems einer Lokomotive (Diesellokomotive oder Elektrolokomotive) dargestellt. Pneumatische Leitungen sind dabei allgemein als durchgezogene Linienzüge und elektrische Leitungen (Signalleitungen) als gestrichelte Linienzüge dargestellt. Es ist eine Hauptluftbehältereitung 1 zu erkennen, die von einer Drucklufterzeugungseinrichtung 2 mit Kompressor, Sicherheitsventil, Lufttrockner, Filter, Druckluftbehälter und Rückschlagventil gespeist wird. An die Hauptluftbehälterleitung 1 sind über Kupplungsvorrichtungen die entsprechenden Leitungen der einzelnen Wagen des Zugverbandes angeschlossen. Mit der Drucklufterzeugungseinrichtung 2 ist ebenfalls ein Zugbremsventil 3 verbunden, das den zur Steuerung der indirekten Bremse des Zugverbandes (Zugbremse) erforderlichen Druck in einer Hauptluftleitung 4 einstellt. An die Hauptluftleitung 4 sind über Kupplungsvorrichtungen die entsprechenden Leitungen der einzelnen Wagen des Zugverbandes angeschlossen. Bei Einstellung eines Druckes von üblicherweise von 5 bar sind die Zugbremsen vollständig gelöst, bei Einstellung eines Druckes von üblicherweise zwischen 3,4 und 5 bar werden Teilbremsstufen der Zugbremse aktiviert und bei einem Druck von üblicherweise unter 3,4 bar wird eine Notbremsung der Zugbremse eingeleitet. Die indirekte Bremse auf der Lokomotive kommt durch eine rein elektrische Ansteuerung des Lok-Bremsventils zur Wirkung.

An die Hauptluftbehälterleitung 1 sind die Bremseinrichtungen eines Drehgestelles 17 der Lokomotive über ein Rückschlagventil 5, ein Absperrventil 7 und eine Druckluftleitung 24 angeschlossen. Ein Druckluftbehälter 6 gewährleistet die Einsatzfähigkeit der Bremseinrichtungen eines Drehgestells bei Ausfall der Hauptluftbehälterleitung 1. Mit dem Absperrventil 7 sind Lok-Bremsventile 8 bzw. 10 verbunden. Diese Lok-Bremsventile 8 bzw. 10 stellen den mittels der Vorgabeeinrichtungen angeforderten Bremszylinderdruck stufenlos ein. Jede direkte Bremse 9 bzw. 11 weist einen Bremszylinder, eine Bremsscheibe und Bremsbacken oder auf Trommeln oder Räder wirkende Bremsklötze auf und dient zur Bremsung einer Achse des Drehgestells 17. Weist das Drehgestell mehr als zwei bremsbare Achsen auf, so sind entsprechend weitere Lok-Bremsventile mit zugeordneten Bremsen vorgesehen.

Das Drehgestell 17 ist über eine weitere Druckluftleitung 25 mit der Hauptluftbehälterleitung 1 verbunden. Diese weitere Druckluftleitung 25 versorgt eine Ansteuerung 12 für die Federspeicherbremsen, eine Ansteuerung 13 für Putzklötze 15 und eine Ansteuerung 14 für die Spurkranzschmierung 16. Die Federspeicherbremsen sind integraler Bestandteil der Bremsen 9, 11 und werden im Bedarfsfall durch die Ansteuerung 12 ausgelöst.

Vorstehend ist lediglich ein einziges Drehgestell der Lokomotive behandelt. Es ist selbstverständlich, daß das mindestens eine weitere Drehgestell der Lokomotive in gleicher Art und Weise ausgerüstet und in das Bremssystem der Lokomotive eingebunden ist. Insbesondere weist jedes Drehgestell direkt zugeordnete Baukomponenten 5, 6, 7 auf.

Jedem Drehgestell sind Vorrichtungen 19 zum Sanden zugeordnet, die durch mit der Hauptluftbehälterleitung 1 verbundene Ansteuerungen 18 aktiviert werden. Beide können, falls zweckmäßig, auch im Drehgestell angeordnet sein.

Zur Aktivierung des Zugbremsventils 3, der Lok-Bremsventile 8, 10 und der Ansteuerungen, 12, 13, 14, 18 dient eine zentrale Bremssteuereinheit 20. Dabei werden die Ansteuersignale zweckmäßig über einen Bremsdatenbus 21 übertragen. Die Bremssteuereinheit 20 ist eingangsseitig mit den vom Lokführer bedienbaren Vorgabeeinrichtungen 22 des Führerstandes verbunden, wie Fahr/Bremsschalter zur Vorgabe von Geschwindigkeit, Drehmoment bzw. Bremskraft, Bremshebel für die direkte Bremse (Lokomotivbremse), Bremshebel für die indirekte Bremse (Zugbremse), Einrichtung zur Vorgabe der Bremsart (elektrische Bremse, mechanisch/pneumatische Bremse, gleichzeitiges Zusammenwirken von elektrischer und mechanischer Bremse) und Einrichtungen zur Vorgabe 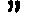 Federspeicherbremsen aktivieren", 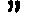 Putzklötze aktivieren", 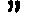 Spurkranzschmierungen aktivieren" und 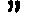 Sanden aktivieren".

Die Bremssteuereinheit 20 empfängt eingangsseitig des weiteren Signale einer Einrichtung 23 zur Erfassung von sich aus dem aktuellen Betrieb des Zugverbandes ergebenden Größen, wie beispielsweise Signale betreffend die Art des Zuges (Güterzug, Fersonenzug, Personenschnellzug, Länge und Masse des Zuges), Signale betreffend die Geschwindigkeit des Zuges und Signale betreffend die aktuelle Bremsart. Diese Signale sind beispielsweise über einen mit dem Zugsteuergerät verbundenen Multifunktionsvehikelbus (Fahrzeugbus) übertragbar.

Von Wichtigkeit ist es, daß sowohl das Zugbremsventil 3 als auch die Lok-Bremsventile 8, 10 nach dem Ruhestromprinzip arbeiten, d. h: das Zugbremsventil 3 entlüftet die Hauptluftleitung, sobald eine Störung der speisenden Spannung auftritt, bzw. die Lok-Bremsventile 8, 10 belüften die Bremszylinder, sobald eine Störung der speisenden Spannung auftritt. Durch die Entlüftung bzw. Belüftung wird zwangsläufig eine Notbremsung ausgelöst.

Von Wichtigkeit ist es auch, daß der Bremssteuereinheit 20 Informationen eingespeichert sind, welche eine Verknüpfung von Signalen der Vorgabeeinrichtung 22 und Signalen der Einrichtung 23 bewirken. Beispielsweise wird die vom Lokführer vorgegebene Bremsanforderung in Relation zur momentanen Geschwindigkeit gesetzt, um eine Uberbeanspruchung der Bremsen zu verhindern und einen 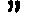 pneumatischen Gleitschutz" zu gewährleisten (Regelung des Bremszylinderdruckes unter Berücksichtigung des pneumatischen Gleitschutzes). Des weiteren gibt die Bremssteuereinheit 20 den Zeitgradienten des Druckaufbaues bei den Lok-Bremsventilen 8, 10 in Abhängigkeit der Länge, der Masse und der Art des Zuges vor.

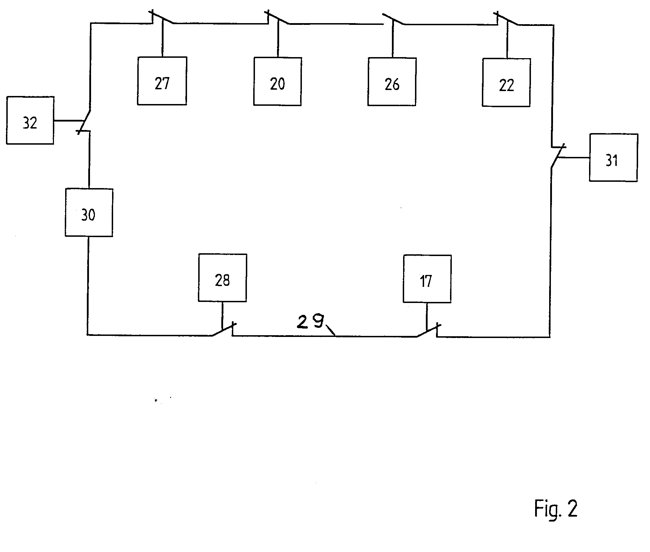

In Fig. 2 ist die Verknüpfung der einzelnen Baukomponenten der Lokomotive mit einer Sicherheitsschleife gezeigt. In Form einer ringförmigen Serienschaltung sind dabei die Bremssteuereinheit 20, das Zugsteuergerät 26, die beiden vom Lokführer bedienbaren Vorgabeeinrichtungen (Notbremsventile) 22, 27, die beiden Zwangsbremsventile 31, 32 sowie die Lok-Bremsventile in den beiden Drehgestellen 17, 28 über eine Sicherheitsschleife 29 und eine Überwachungseinheit 30 miteinander verbunden. Die Überwachungseinheit 30 speist permanent einen Strom in die Sicherheitsschleife 29 und überwacht den Stromfluß. Über die seriengeschalteten, den einzelnen Baukomponenten zugeordneten und durch diese ansteuerbaren - d. h. im Falle einer Störung zu öffnenden - Relaiskontakte ist angedeutet, daß die Sicherheitsschleife 29 bei Störung einer Baukomponente aufgetrennt wird. Folglich reißt der Stromfluß durch die Sicherheitsschleife ab und die Überwachungseinrichtung 30 löst eine Notbremsung aus, indem die Lok-Bremsventile in den Drehgestellen 17, 28 im spannungslosen Zustand den maximalen Bremszylinderdruck einspeisen und die Zwangsbremsventile 31, 32 die Hauptluftleitung 4 schnellstmöglich entlüften (Ruhestromprinzip).

Zur Sicherheit stellen die Lok-Bremsventile in den Drehgestellen 17, 28 auch dann den maximalen Bremszylinderdruck ein und entlüften die Zwangsbremsventile 31, 32 die Hauptluftleitung 4 (und lösen hierdurch eine Notbremsung aus), wenn sie von der Spannungsversorgung abgetrennt sind, beispielsweise bei Kabelbruch oder einer Störung der Spannungsversorgung der Lokomotive.

## Patentansprüche

1. Bremssystem für eine Lokomotive mit einer Hauptluftbehälterleitung (1), welche von einer Drucklufterzeugungseinrichtung (2) gespeist wird, und mit einer Hauptluftleitung (4), welche über ein Zugbremsventil (3) von der Drucklufterzeugungseinrichtung (2) gespeist wird, dadurch gekennzeichnet,
daß jedem Drehgestell (17, 28) zwei Druckluftleitungen zugeführt sind, nämlich eine erste Druckluftleitung (24), welche über ein Absperrventil (7), ein Rückschlagventil (5) und einen Druckluftbehälter (6) mit der Hauptluftbehälterleitung (1) verbunden ist und welche die Lok-Bremsventile (8, 10) zur Beaufschlagung von Bremsen (9, 11) des Drehgestells speist,
und eine zweite Druckluftleitung (25), welche direkt mit der Hauptluftbehälterleitung (1) verbunden ist und welche eine Ansteuerung (12) für die Federspeicherbremse und/oder eine Ansteuerung (13) für den Putzklotz (15) und/oder eine Ansteuerung (14) für die Spurkranzschmierung (16) speist,
wobei die Ansteuerung des Zugbremsventils (3), der Lok-Bremsventile (8, 10) sowie die Aktivierung der Ansteuerung (12) für die Federspeicherbremse und/oder der Ansteuerung (13) für den Putzklotz (15) und/oder der Ansteuerung (14) für die Spurkranzschmierung (16) über eine zentrale, elektronische Bremssteuereinheit (20) und einen Bremsdatenbus (21) erfolgt,
und der Bremssteuereinheit (20) Signale der vom Lokführer bedienbaren Vorgabeeinrichtungen (22, 27) und Signale einer Einrichtung (23) zur Erfassung von sich aus dem aktuellen Betrieb ergebenden Größen - wie Art, Länge und Masse des Zuges, Geschwindigkeit und Bremsart - eingangsseitig vorliegen.

2. Bremssystem nach Anspruch 1, dadurch gekennzeichnet, daß der Bremssteuereinheit (20) Informationen eingespeichert sind, welche eine Verknüpfung von Signalen der Vorgabeeinrichtungen (22, 27) und Signalen der Einrichtung (23) zur Erfassung von sich aus dem aktuellen Betrieb ergebenden Größen bewirken.

3. Bremssystem nach Anspruch 1 oder 2, dadurch gekennzeichnet, daß die Bremssteuereinheit (20), ein Zugsteuergerät (26), die Vorgabeeinrichtungen (22, 27) in den Führerständen und die Drehgestelle (17, 28) über eine Sicherheitsschleife (29) miteinander verknüpft sind, wobei bei Störung einer dieser Baukomponenten eine Auftrennung der Sicherheitsschleife erfolgt, worauf mittels einer Überwachungseinheit (30) Maßnahmen zur Notbremsung einleitbar sind.
